## Europäisches Patentamt

## European Patent Office

## Office européen des brevets

(11) Publication number: **0 033 821**
**A2**

(12) **EUROPEAN PATENT APPLICATION**

(21) Application number: **80830095.8**

(22) Date of filing: **11.11.80**

(51) Int. Cl.³: **H 04 M 11/06**

(30) Priority: **07.02.80 IT 4783580**

(43) Date of publication of application: **19.08.81**
**Bulletin 81/33**

(84) Designated Contracting States: **AT BE CH DE FR GB LI LU NL SE**

(71) Applicant: **ITALDATA S.p.A., Pianodardine, I-83100 Avellino (IT)**

(72) Inventor: **Lazzari, Maurizio, Via Cassia 1041, Roma (IT)**
Inventor: **Cataldo, Adamo, via Tagliamento 48, Avellino (IT)**
Inventor: **Fedele, Michele, via Bartolo Longo 211, Napoli (IT)**

(74) Representative: **Fiammenghi, Carlo et al, c/o Flammenghi-Flammenghi Via Quattro Fontane, No. 31, I-00184 Roma (IT)**

(54) **Intelligent interfacing apparatus for the automatic management of a switched or dedicated telecommunication line.**

(57) An intelligent interfacing apparatus for the automatic management of a switched or dedicated telecommunication line which provides for the data transmission and the exchange of the informations between central and/or peripheral electronic processors, teletypewriters or video terminals, or generally between logic or smart units even if different from each other, which are installed at different user connected via switched and/or dedicated telecommunication lines. The interfacing device can be connected between the telecommunication line and the local station which is thus free from the establishing the telecommunication connection (also by means of suitable conversion of protocols) both towards the telecommunication network and the called terminal, from exchanging the requested data, monitoring and checking eventual failures occurred during the transmission, or inside the apparatus translating the format of the data and storing in the memory the transmitted informations awaiting the recall by the logic unit at any moment. A reduced version of the intelligent interfacing apparatus can give it more transparencies, leaving some tasks to the user's station (modem's commands).

- 1 -

Intelligent interfacing apparatus for the automatic
management of a switched or dedicated telecommunication
line.

The present invention relates to an intelligent interfacing
apparatus for the management of a switched and/or dedicated
telecommunication line, for example, also by the suitable
conversion of the protocols in order to allow the informations to be exchanged between logic units, for example,
central and/or peripheral electronic processors, various
subscribers connected to each other via a telecommunication
line a.s.o. In particular, the interfacing apparatus
of the present invention, interconnected between the
logic unit and the normal telecommunication line, provides
automatically for carrying out all functions to establish
a telecommunication connection, transmitting or receiving
the requested informations, matching the speech protocols
of different subscribers, modulating and/or demodulating
the digital signals, translating the format of such
informations to be transmitted and/or interpreted by
the called user and checking the transmitted informations.
Furthermore, it is provided with a memory in which the
received data are stored so that the user can recall them at any moment without interrupting his operations when receiving the informations. Finally, it is also provided a diagnostic system of eventual failures in the interfacing apparatus or user's station and anomalies during the connection between the users . It should be appreciated that the interfacing apparatus can be adapted to any type of user's stations , i.e.central and/or peripheral processors, teletypewriters or video units, and generally logic units by means of only a little adaptation in hardware and/or software.

The socalled automatic calling devices and the switched line terminations are well known in the art. They permit to dial automatically the desired telephone number and to reply automatically to the telephone calls, respectively.

If we assume to have both equipment at both terminal heads or head ends of a telecommunication line it is possible to exchange informations between the two subscribers by using a third equipment for data transmission or modem, which allows data supplied by a data source connected thereto to be automatically transmitted via the telecommunication line. Therefore, to establish this connection at the present status of art it is necessary to have at disposal various separate equipments with the disadvantages of a considerable encumbrance and a high cost.

Furthermore the data source feeding the modem with the informations to be transmitted via the telecommunication line must supply the data continuosly from the beginning to the end of the connection and cannot be disconnected from the modem during the transmission. This long time engagement of the data source causes a considerable loss of time and the increasing in the running costs as the data source, generally a central and/or peripheral processor, is bound to a data transmission speed which is equal to that of the telecommunication line being of course less than the speeds with which the up-to-date electronic processors can operate . Finally it is at the present time necessary that in exchanging data between electronic units the two logic units to be connected provide an identical speech protocol. However, this is not always the case since each constructor of processors uses an own protocol different from that of the other ones.

Therefore, it is needed a system which as above mentioned performs by a single equipment the functions of several devices as well as establishes the connection and permits the data exchange between electronic processors also of different constructors, the switched/dedicated line integration and the choice of the data transmission speed. This system should have very small dimensions as well as should be provided with a central data processing unit (CPU) which stores data to be transmitted in its memory. The data are fed to the CPU of the proposed system by the associated user's electronic processor with the more suitable speed so as to allow the latter to be disengaged from the slower (or faster) data transmission line thus providing a considerable saving in the running costs . These requirements are fully met by the intelligent interfacing apparatus according to the present invention which consists

0033821

of only one equipment connected between the electronic processor and the telecommunication line and allows a connection to be automatically established between users for data exchange.Furthermore it eliminates the relevant costs of the user's processor during the waiting time due to the dialling call and the data transmission and data checking since it release the user from all the problems relative to the establishment of the telecommunication connection and to the translation of the informations; it is offered to store both a series of line numbers and the informations to be transmitted to each subscriber on the telecommunication line. Likewise it can automatically receive calls by another similar interfacing apparatus for data exchange to be successively transferred to the associated user's station. Due to the complete disengagement of the user during the data transmission and to the presence of a central processing unit (CPU) the intelligent interfacing apparatus according to the present invention can to use the same speech protocol of the associated user in the dialo gue processor/interfacing apparatus.At the same time it is possible to implement a suitable speech protocol between the two interfacing apparatus at the ends of the switched telephone line in order to allow the transmission of any binary data configuration without ambiguity between the data and the checking digits. Therefore the intelligent interfacing apparatus according to the present invention relates to the distributed informatic and particularly proposes to improve the connections via the telecommunication lines so as to make it more advantageaus with respect to other connecting means. As an example, we assume that a logic unit A has to ask a logic unit B data stored therein. Both units are of course provided with an interfacing apparatus according to the present invention which is connected between them and the telecommunication line. The unit A has only to transfer in the interfacing apparatus the line number of the unit B and the data request, whereupon it can disconnect from the interfacing apparatus so as to resume its operation. Therefore the interfacing apparatus according to the present invention provides for calling automatically the logic unit B also by a suitable conversion of the speech protocols, recognizing the called logic unit so that the latter actually corresponds to the dialled number, collecting the requested data, checking such data have been exactly transmitted and storing them in its memory awaiting the logic unit A recalls them successively on request. As it is evident from the foregoing example the interfacing apparatus according to the present invention provides a considerable improvement in a distributed informatic network so as to reduce the costs and the dimensions of the conventional equipment necessary to establish the connection as well as the running costs of the logic units involved in the data exchange. The present invention will now be described more into detail on the basis of a preferred embodiment with reference to the accompanying drawing , wherein:

 Fig.1 is a block diagram of the line interfacing device and of the modem of the interfacing apparatus according to the present invention;

Fig.2 is a block diagram of the logic unit of the interfacing apparatus according to the present invention.

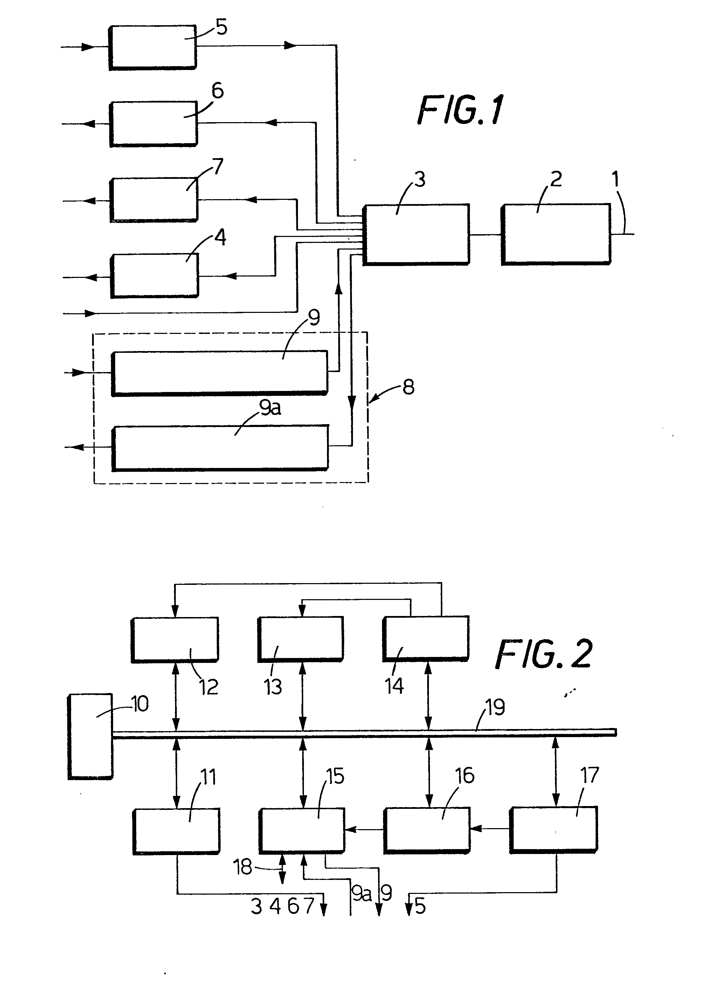

The interfacing apparatus according to the present invention canessentially be divided into three basic parts: the line interfacing device, the modem and the logic unit. Referring now to Fig.1, which is referred to a particular case of analogic network , the interfacing apparatus of the invention is connected to the telecommunication line marked with 1 by means of a common telephone plug. The line interfacing device includes (Fig.1) an impedance adapter or line balancer 2, a group of relays 3, for switching on/off the telecommunication line when a call is effected or received or the data are transmitted, a call detector 4, a tone generator 5 operating at 1300 Hz and 2100 Hz, a detector 6 of the tone at 2100 Hz and a detector 7 of the exchange tone. In Fig. 1, the modem 8 is also illustrated which consists of a modulation unit 9 and a demodulation unit 9a. Referring now to Fig. 2, the logic unit of the interfacing apparatus according to the present invention includes: a central processing unit or microprocessor 10, a parallel imput/ output unit 11, a random access memory (RAM) 12, an erasable, programmable read-only memory (EPROM) 13, a decoding unit 14, an universal syncronous/asyncronous transceiving unit 15, a programmable timer 16 for controlling the transmitting and the receiving frequency, and a timing circuit 17 for controlling the call and the response tones. Initially the interfacing apparatus according to the present invention is waiting that one of following events takes  place: 1-request for
conversation by the associated user's station;
2-external telephone call by another user's station.
In both cases the interfacing apparatus comes into
operation and particularly in the first one t user
can make the following four request to the interfacing
apparatus:

a) calling a user number and transmitting  a text
to the interfacing apparatus connected to such a user
number;

b) calling a user number and receiving a text supplied
by the interfacing apparatus connected to such a user
number;

c)  calling a user  number and connecting with the
called interfacing apparatus to have a conversation
for mutual exchange of informations supplied by the
respective user .

d) calling a user number to realize telediagnostic
procedures.In the second case the operations which
may be effected by the interfacing apparatus after
a call by another interfacing apparatus are of course
reciprocal to the foregoing ones, and namely:

a') recognizing the control signal for receiving a
text supplied by the calling interfacing apparatus
and transmitting the same to the associated user;

b') recognizing and transferring the control signal
for transmitting a text to the associated, called user
receiving ,the text by the latter and transmitting the
same to the calling apparatus;

c') recognizing the control signal of information exchange,
which is followed by an alternate sequence of transmitting and receiving messages;

d') recognizing the telediagnostic signal and operating both selftest and test of the user's station.

The operation of the interfacing apparatus relative to the case a) in a particular case of analogic network is now described, on the basis of which the operation relative to the other seven cases will be evident to those skilled in the art and will not be illustrated into detail. Initially the user transfer the line number to be called and the eventual text to be transmitted in the associated interfacing apparatus through the universal syncronous/asyncronous transceiving unit 15 and the line 18. Data pass through the transceiving unit 15 and are transferred via the bus bar 19 to a central processing unit or microprocessor 10 which stores the data in the random access memory (RAM) 12. When all the data have been transferred by the associated user for example an electronic processor, to the interfacing apparatus the former hands over to the latter the control of the program and resumes its operation. In fact, the microprocessor 10 engages the telecommunication line 1 and controls through the parallel input/output unit 11 the line relays 3, which switch on the telecommunication line through the line balancer or line fork 2. This operation corresponds of course to the lifting of the microtelephone in the case of a telephone service. Now, it is necessary to check that the telecommunication line is free before dialling the number to be called and therefore it is to detect the exchange tone issued via the telecommunication line 1. This is effected by the exchange tone detector 7, in which the exchange tone first is preamplified and then filtered by a low-pass filter centered about the frequency of approximately 420 Hz. The signal of the filter is further amplified and detected in a RC group. The signal coming from the foregoing preamplifier is further detected and amplified. Thus two signals are obtained from the exchange tone which are supplied to a threshold comparator. Therefore it is obtained a detection in the band of interest which is not depending on the level of the input signal. If the level of the signal or the frequency thereof do not correspond to those of a free line, a signal will be generated which is fed through the input/output unit 11 to the microprocessor 10 where it is interpreted as a control pulse for the repetition of the cycle of engagement of the telephone line and the process is reinizialized. If the detected level and the frequency thereof correspond to those of a free line, a low level signal will be generated which is fed through the same path to the microprocessor 10 where it is interpreted as a control of dialling the line number to be called which is stored in the random access memory (RAM)12. The line number to be called is drawn off digit after digit from the RAM 12 and is fed from the microprocessor 10 through the input/output unit 11 to the line relays 3 which will provide for the dialling of the line number of the called user on the line 1. At the receiving site, the call comes through the line balancer 2 and the line relays 3 to the call detector 4 which detects the line current by means of a rectifier bridge and a photocoupler device. When the call reaches the call detector 4, the latter generates a signal which is fed through the input/output unit 11 to the microprocessor 10 which

0033821

is thus ready to receive the call tone from the calling user. The latter, once selected the line number, generates a call tone at 1300 Hz by the timer 17 and the tone generator 5 of the tones at 1300 Hz and 2100 Hz. In fact, the microprocessor 10 of the calling user supplies a control signal to the timer 17, which acts in this case like an astabile multivibrator and generates a call tone, i.e. a square wave at 1300 Hz, which is fed to the tone generator 5. The tone generator 5 of the tones at 1300 Hz and 2100 Hz, which includes filters for the conversion of the square wave into a sinusoidal one, amplifiers and attenuators for regulation of the signal level, supplies the call tone at 1300 Hz to the telecommunication line 1 through the line relays 3 and the line balancer 2. The microprocessor 10 of the called user supplies in turn a control signal to the timer 17 for the generation of a square wave at 2100 Hz, i.e. the resonance tone which is fed to the generator 5 so that the latter processes the signal likewise as before and transmits the response tone at 2100 Hz on the telecommunication line to the calling subscriber. At the calling site the response tone is recognized in the tone detector 6 at 2100 Hz, in which the tone is passed through a preamplifier and a low-pass filter for the selection at 2100 Hz. The latter acts also a stop filter in order to keep into account the ground noise of the line. Both signals are amplified and levelled so as to provide a voltage proportional to the signal in the band which is suitable amplified and a voltage proportional to the noise of the line. Both signals are then supplied to a comparator, the threshold of which is proportional to the noise out of the band. If the output signal is null, either it has been detected only noise or the line signal is too low, and this is interpreted as a line drop or a request for a new selection of the telephone number. On the contrary when the output signal is different from zero, it is supplied through the input/ output unit 11 to the microprocessor 10 which is ready to transmit the data under a control signal to the line relays 3 that switch the telecommunication line 1 over the modulation unit 9 of the modem 8 and the transceiving unit 15. The microprocessor 10 of the called user generates in turn a control signal to the line relays 3 to switch the telecommunication line 1 over the demodulation unit 9a of the modem 8 whereupon the text is received through the transceiving unit 15. The text to be transmitted is stored in the random access memory 12 in which it has been previously transferred from the main processor, while all the program, i.e. the operations to be effected by the microprocessor 10, is stored in the program memory 13. To both memories and to the whole apparatus a decodific logic 14 is then associated which includes multiplexers for the identification of the various operating blocks of the system, to which the different controls have to be addressed. Furthermore the programmable timer 16 is arranged for the selection of the data transmission speed and includes a series of oscillators and frequency dividers for the control of the receiving/transmitting frequency of the transceiving unit 15 by means of suitable changeover switches and/or bridges inserted by the operator. In such a way, from and towards the main processor a date transmission speed may be controlled which can vary up

to 9.600 Bd in the asyncronous mode and up to 56.000 Bd in the syncronous mode, while towards the telecommunication line a speed is controlled which is limited only by the characteristics of the line. This allows the maximum speed of the main processor to be used for the data transmission from the latter to the interfacing apparatus and viceversa, while once disengaged the main processor the data transmission on the telecommunication line can be effected with the speed of the line itself.

Claims

1. An itelligent interfacing apparatus for the automatic management of a switched or dedicated telecommunication line, which provides for the data transmission and the exchange of the informations between central and/or peripheral electronic processors, teletypewriters or video terminals, or generally between logic or smart units even if different from each other, which are installed at different users connected via switched and/or dedicated telecommunication lines. Said interfacing apparatus being able to be connected between the telecommunication line and the local station ,which is thus free from establishing the telecommunication connection, also by means of a suitable conversion of the protocols, both towards the telecommunication network and the called terminal, from exchanging the requested data, monitoring and checking eventual failures occurred during the transmission, or inside the apparatuses translating the format of the data and storing in the memory the transmitted informations awaiting the recall by the logic unit at any moment. The interfacing apparatus including e.g. in this case of analog network essentially a line interfacing unit, a modem and a logic unit, said line interfacing unit including in turn a line balancer 2, telecommunication line switching relays 3, a call detector 4, a call and response tone generator 5, a response tone detector 6, an exchange tone detector 7, said modem 8 including a modulation unit 9 and a demodulation unit 9a of the data to be transmitted and received, respectively via the telecommunication line 1 and through the switching relays 3. and said logic unit including a central processing unit or microprocessor 10, a parallel input/output unit 11 a random access memory 12, an erasable, programmable read-only memory 13, a decodific unit 14 , an universal syncronous/asyncronous transceiving unit 15, a programmable timer 16 for the data transmitting and receiving frequency and a timer 17 for the call and the response tones.

2. An interfacing apparatus according to the claim 1, includes a rectifier bridge for the line current, to which a photocoupler device for the detection of the line current is associated.

3. An interfacing apparatus according to the claim 1, characterized by the fact that said call and response tone generator 5 at 1300 Hz and 2100 Hz includes filters which are centered at both frequencies, respectively and amplifiers and attenuators for controlling the level of the signal.

4. An interfacing apparatus according to the claim 1, characterized by the fact that said response tone detector 6 includes a band-pass and stop filter associated to means for amplifying and detecting both the signals in the band and the signals out of the band, and comparator means for these signals, the threshold of which is proportional to the signals out of the band.

5. An interfacing apparatus according to the claim 1, characterized by the fact that said exchange tone detector 7 includes a preamplifier, a band-pass filter, an amplifier and a RC group for the tone detection, and amplification and detection means for the signal from said preamplifier and comparator means for the latter and for the signal from said detecting RC group.

6. An interfacing apparatus according to the claim 1, characterized by the fact that said programmable timer 16 for the data transmitting and receiving frequencies includes a series of oscillators and frequency dividers for controlling the transmitting/receiving frequencies of said universal syncronous/asyncronous transceiving unit 15.

7. An interfacing apparatus according to the claim 1, characterized by the fact that said timer 17 for the call and response tone includes astabile multivibrator means for the generation of a square wave supplied to the tone generator 5 at 1300 Hz and 2100 Hz.

8. An interfacing apparatus containing micrologic components having the function of adapting their characteristics to the different types of transmission lines and to the various logic units installed at different subscribers, said apparatus being arranged so that the micrologic components thereof can be inserted or replaced in same case through simple insertion or disinsertion operations

9. A reduced version of the intelligent interfacing apparatus according to claim 1, wherein the wires for the modem's commands are passing through the the user's station so that the interfacing apparatus becomes more transparent leaving some stasks to the user's station (modem's commands).

1|1

FIG.1

FIG.2